# EUROPEAN PATENT SPECIFICATION

(11) **EP 2 405 026 B1**
(45) Date of publication and mention of the grant of the patent: **28.11.2018**
(21) Application number: 10748669.8
(22) Date of filing: 19.02.2010
(51) Int. Cl.: C22C 38/00, C22C 38/06, C22C 38/04, C22C 38/14, C21D 9/46, C21D 9/48, C21D 8/02, C21D 8/04

(54) **COLD-ROLLED STEEL SHEET HAVING EXCELLENT BENDABILITY AND METHOD FOR PRODUCING THE SAME**
KALTGEWALZTE STAHLPLATTE MIT AUSGEZEICHNETER BIEGBARKEIT UND VERFAHREN ZU DEREN HERSTELLUNG
FEUILLE D'ACIER LAMINÉE À FROID AYANT UNE EXCELLENTE APTITUDE AU PLIAGE ET SON PROCÉDÉ DE FABRICATION

(30) Priority: 05.03.2009 JP 2009051760; 22.12.2009 JP 2009290244
(43) Date of publication of application: 11.01.2012
(73) Proprietor: JFE Steel Corporation, Tokyo 100-0011 (JP)
(72) Inventor: FUJITA, Koichiro, Tokyo 100-0011 (JP); HANAZAWA, Kazuhiro, Tokyo 100-0011 (JP); YASUHARA, Eiko, Tokyo 100-0011 (JP)
(74) Representative: Grünecker Patent- und Rechtsanwälte PartG mbB
(86) International application number: PCT/JP2010/053016
(87) International publication number: WO 2010/101074

(56) References cited:
- WO-A1-2008/102006
- JP-A- 4 280 926
- JP-A- 6 248 339
- JP-A- 9 241 744
- JP-A- 2007 211 321
- JP-A- 2008 202 113
- DATABASE WPI Week 199606 Thomson Scientific, London, GB; AN 1996-056367 XP002721383, & JP H07 316661 A (KAWASAKI STEEL CORP) 5 December 1995 (1995-12-05)

## Description

### Technical Field

The present invention relates to cold-rolled steel sheets, used in fields such as electric appliances, building materials, and automobiles, for machining and particularly relates to a cold-rolled steel sheet with excellent bending workability, a method for manufacturing the same, and a member using the same.

### Background Art

Cold-rolled steel sheets, called SPCC specified in JIS G 3141, for general machining are used for members, such as electric appliance housings, construction scaffold planks, cabinet side plates, and cabinet top plates, not subjected to extremely severe drawing or stretching among members for use in electric appliances, building materials, automobiles, or the like. In view of material cost reduction, steel sheets used for members are preferably thin-gauged; however, thin gauging causes problems with a reduction in member strength. Such problems with a reduction in member strength are solved by the use of a high-strength steel sheet, disclosed in NPL 1, having a tensile strength TS of 390 MPa or more. Such high-strength steel sheets contain an expensive element such as Mn and therefore have high manufacturing costs. Thin gauging does not lead to a reduction in manufacturing cost in many cases.

In general, cold-rolled steel sheets used for electric appliances, building materials, automobiles, and the like are manufactured by recrystallization annealing after cold rolling. As inexpensive high-strength steel sheets, known are cold-rolled steel sheets which are not annealed after cold rolling and which are called full hard material. The full hard material has a rolling texture, does not contain a large amount of any expensive alloy element, and has high strength due to work hardening by cold working. Therefore, the full hard material is suitable for thin-gauging steel sheets at low cost. However, thin gauging causes a reduction in rigidity and therefore a steel sheet sometimes needs to be bend in the rolling direction and rolling transverse direction thereof. In order to apply the full hard material, which has very poor bending workability in the rolling transverse direction, to members, the bending workability thereof needs to be improved. In particular, members used in electric appliances have screw pilot holes formed by burring and are screwed in some cases. In the case of using the full hard material for such members, the full hard material needs to have good burring workability for screw pilot holes and high screw-breaking torque.

Known techniques for improving the workability of full hard materials include methods for softening hot-rolled steel sheets by the utmost reduction of C, the addition of Ti and/or Nb as required, or α-rolling as disclosed in PTLs 1 to 5. PTL 6 discloses a technique in which the ductility of an extremely thin steel sheet with a thickness of 0.25 mm during flanging subsequent to DI processing is improved in such a manner that the crystal grain diameter thereof is adjusted to an ultra fine level, 8 µm or less, by the control of the content of each of C, Mn, and Al and the addition of Nb. However, these techniques are specialized for the workability of container materials with a thickness of less than 0.4 mm and are not specialized for workability required in fields, such as electric appliances, building materials, and automobiles, using steel sheets with a thickness of 0.4 mm or more. In bending, the influence of sheet thickness is large and therefore information obtained from the container materials with a thickness of less than 0.4 mm cannot be directly used. Particularly in the electric appliance field, in view of design, severe 90-degree bending is performed at a punch tip curvature of 2R (the tip curvature radius of a punch is 2 mm) or less in many cases and is significantly different from moderate bending used for container materials. The achievement of ultra fine grains as described in PTL 6 causes problems with low producibility.

Meanwhile, PTL 7 proposes a method for manufacturing a full hard material suitable for applications such as such as electric appliances, building materials, and automobiles, that is, a method for manufacturing a steel sheet having a component composition of more than 0.0040% to 0.08% C, less than 0.030% P, less than 0.010% Ti, and less than 0.010% Nb, the remainder being Fe and unavoidable impurities, in such a manner that the temperature of coiling after hot rolling is adjusted to 650°C to 750°C, the average grain diameter is adjusted to less than 30 µm before cold rolling, and an annealing step is not performed after cold rolling at 70% or more or in such a manner that hot rolling is performed at a finishing temperature lower than the Ar₃ transformation point and an annealing step is not performed after cold rolling at 70% or more.

### Citation List

### Patent Literature

PTL 1: Japanese Examined Patent Application Publication No. 54-1244
PTL 2: Japanese Patent No. 3023385
PTL 3: Japanese Patent No. 3571753
PTL 4: Japanese Unexamined Patent Application Publication No. 8-92638
PTL 5: Japanese Unexamined Patent Application Publication No. 8-127815
PTL 6: Japanese Unexamined Patent Application Publication No. 8-92692
PTL 7: Japanese Patent No. 3448422

### Non Patent Literature

NPL 1: DENKI-SEIKO, vol. 70 (1999), p. 5

Furthermore, WO 2008/102006 A1 relates to the use of a high strength, cold rolled packaging steel with good deformation capability comprising: C : 0.0005 - 0.004 wt.%, Mn : 0.050 - 0.300 wt.%, Alₛₒₗ: 0.010 - 0.100 wt.%, N : 0.0005 - 0.0050 wt.%, S : 0- 0.020 wt.%, P: 0 - 0.020 wt.%, Cr: 0 - 0.050 wt.%, Cu: 0 - 0.050 wt.%, Si : 0 - 0.020 wt.%, Ni : 0 - 0.050 wt.%, Ti : 0.01 - 0.085 wt.%. Further optionally comprising one or more of the micro-alloying elements selected from the group of: B : 0.0005 - 0.0030 wt.%, V: 0.01 - 0.150 wt.%, Zr: 0.01 - 0.150 wt.%, the remainder being iron and unavoidable impurities, the steel having a full hard microstructure to produce packagings such as containers or can ends, and relates to a method for producing said packagings.

Finally, JP2007211321 discloses a cold rolled steel sheet for a CPU socket frame and a CPU fixing cover made from a steel comprising 0.01-0.20wt.% C, up to 0.5wt.% Si, up to 1.5wt.% Mn, up to 0.05wt.% P, up to 0.01wt.% S, 0.005-0.10wt.% sol.Al, up to 0.007wt.% N, optionally 0.01-0.15wt.% Ti and/or 0.01-0.15wt% Nb, with a cold rolling reduction ratio of 20-50%.

### Summary of Invention

### Technical Problem

However, a full hard material manufactured by a method described in PTL 7 is investigated for elongation only as workability and cannot comply with severe bending required in the electric appliance field or burring for screw pilot holes in some cases. Therefore, there have been demands for cold-rolled steel sheets which can be adapted to thin gauging, which can be manufactured at low cost, and which has excellent bending workability.

The present invention has an object to provide an inexpensive cold-rolled steel sheet which has excellent bending workability and which can be worked by severe 90-degree bending at a punch tip curvature of 2R or less even though being thin-gauged, the cold-rolled steel sheet being excellent in burring workability for screw pilot holes or being capable of advantageously achieving high screw-breaking torque; an object to provide a method for manufacturing the same; and an object to provide a member using the same.

### Solution to Problem

The inventors have made intensive investigations to achieve the above objects and have obtained findings below.
(i) In order to strengthen a cold-rolled steel sheet at low cost, it is effective that recrystallization annealing after cold rolling is omitted and a cold-rolled steel sheet as cold-rolled or recovery-annealed is used.
(ii) In order to prevent a cold-rolled steel sheet, as cold-rolled or recovery-annealed, having a thickness of 0.4 mm or more from being cracked during severe 90-degree bending at a punch tip curvature of 2R or less, the sheet thickness direction ultimate ductility of the cold-rolled steel sheet needs to be adjusted to 1.3 or more in such a manner that the component composition, particularly the content of C, is appropriately adjusted and the morphology of precipitates in a hot-rolled steel sheet is adjusted before cold rolling. The term "sheet thickness direction ultimate ductility" as used herein refers to the natural logarithm Ln(t₀/t₁) of the ratio of the thickness t₀ of an untested steel sheet to the thickness t₁ of the fracture surface of the tested steel sheet as determined by a tensile test.
(iii) When pilot hole burring is particularly required, the average crystal grain diameter of a hot-rolled steel sheet needs to be controlled to 25 µm or less before cold rolling.

The present invention has been made on the basis of the above findings and provides a cold-rolled steel sheet according to claim 1 which is excellent in bending workability.

Preferred embodiments are set out in dependent claims 2 to 6.

The cold-rolled steel sheet according to the present invention is preferably used to form a member having a bent portion.

The cold-rolled steel sheet with excellent bending workability according to the present invention can be manufactured according to claim 7 having a component composition as specified in claim 7.
Preferred embodiments are set out in dependent claims 8 and 9.

### Advantageous Effects of Invention

According to the present invention, the following steel sheet can be provided: a high-strength steel sheet which has a tensile strength TS of 390 MPa or more and which is capable of being worked by severe 90-degree bending at a punch tip curvature of 2R or less. The use of the steel sheet allows a member to be thin-gauged. The use of a cold-rolled steel sheet as cold-rolled or recovery annealed according to the present invention enables cost reduction without using any expensive strengthening element. Furthermore, the present invention can be applied to members having screw pilot hole-bored portions by adjusting the tensile strength TS of the cold-rolled steel sheet. Description of Embodiments

A feature of the present invention is that high strength, that is, a tensile strength of 390 MPa or more, and excellent bending workability enabling severe 90-degree bending at a punch tip curvature of 2R or less are both achieved in such a manner that the component composition and the state of precipitates present in a hot-rolled steel sheet are adjusted, the strength is increased by adjusting the rolling reduction during cold rolling, and a cold-rolled steel sheet, as cold-rolled or recovery annealed, having a sheet thickness direction ultimate ductility of 1.3 or more is obtained. Another feature thereof is that burring workability for screw pilot holes and screw-breaking torque are improved by appropriately adjusting the crystal grain diameter of the hot-rolled steel sheet and the tensile strength TS of the cold-rolled steel sheet.

A cold-rolled steel sheet with excellent bending workability according to the present invention is described below in detail. The unit "%" relating to the component composition refers to "% by mass" unless otherwise specified.

### (1) Component composition

### C: 0.025% or less

When the content of C is more than 0.025%, a large number of coarse cementite precipitates are formed during hot rolling and therefore 90-degree bending at a punch tip curvature of 2R or less is seriously deteriorated. Thus, the content of C is preferably 0.025% or less and more preferably 0.020% or less. In order to enable contact bending, the Content of C is preferably 0.0040% or less and more preferably 0.0030% or less. An extremely reduction in the Content of C leads to an increase in cost; hence, the Content of C is preferably 0.0010% or more. When the Content of C is as low as less than 0.0010%, the crystal grain diameter of the hot-rolled steel sheet is large, a machined portion thereof is likely to be disfigured, and the burring workability thereof is likely to be low particularly in the case of performing burring for the purpose of forming screw pilot holes. In view of this, the Content of C is preferably 0.0010% or more.

### Si: 0.1% or less

When the content of Si is as large as more than 0.1%, the steel sheet has deteriorated surface properties. Therefore, the upper limit thereof is preferably 0.1% and more preferably 0.013% or less.

### Mn: 0.05% to 0.5%

Mn is an element that forms a sulfide to improve hot shortness; hence, the content thereof is 0.05% or more. On the other hand, when the content thereof is large, the effect thereof is likely to be saturated and costs are increased; hence, the upper limit thereof is 0.5%.

### P: 0.03% or less

P segregates during slab casting to deteriorate mechanical properties and therefore the upper limit thereof is 0.03%.

### S: 0.02% or less

S is an element causing a reduction in hot workability and therefore the upper limit thereof is preferably 0.02% and more preferably 0.010% or less. On the other hand, when the content of S is extremely low, the crystal grain diameter of the hot-rolled steel sheet is likely to be large and the burring workability thereof is sometimes low in the case of performing burring for the purpose of forming screw pilot holes; hence, the lower limit thereof is preferably about 0.003%.

### sol. Al: 0.01% to 0.1%

Al has a deoxidizing action and therefore the content of sol. Al is 0.01% or more. In view of low cost, the upper limit thereof is 0.1%.

The remainder other than the above-mentioned elements is Fe and unavoidable impurities. At least one or two of 0.002% to 0.05% Ti and 0.002% to 0.05% Nb may be further contained. Ti and Nb have the effect of reducing the crystal grain diameter of the hot-rolled steel sheet to improve the appearance of a bent portion. In particular, when the Content of C is 0.0040% or less, the crystal grain diameter of the hot-rolled steel sheet is likely to be large and burring workability for screw pilot holes is deteriorated in some cases. In view of this, at least one thereof is preferably contained. In order to improve the thickness evenness and cold shortness of the cold-rolled steel sheet, 0.0001% to 0.005% B may be further contained.

### Ti: 0.002% to 0.05%

Ti has the effect of reducing the crystal grain diameter of the hot-rolled steel sheet and therefore 0.002% or more Ti is preferably added. When the crystal grain diameter of the hot-rolled steel sheet is large, the bent portion is surface-roughened and is disfigured. This can be improved by the effect of Ti. Furthermore, when the crystal grain diameter of the hot-rolled steel sheet is large in the case of performing burring for screw pilot holes, burring workability is likely to be reduced and a problem is likely to occur particularly when the Content of C is 0.004% or less. On the other hand, when the content thereof is more than 0.05%, the effect thereof is saturated and costs are increased; hence, the upper limit of the content of Ti is preferably 0.05% and more preferably 0.04% or less.

### Nb: 0.002% to 0.05%

Nb, as well as Ti, has the effect of reducing the crystal grain diameter of the hot-rolled steel sheet, the effect of improving the appearance of the bent portion, and/or the effect of improving burring workability for screw pilot holes. Therefore, the content thereof is preferably 0.002% or more. On the other hand, when the content thereof is more than 0.05%, the effect thereof is saturated and costs are increased; hence, the upper limit of the content of Nb is preferably 0.05% and more preferably 0.04% or less.

### B: 0.0001% to 0.005%

B has stronger affinity to N as compared with Al and therefore suppresses the formation of fine AlN precipitates which are unevenly formed after hot rolling to cause a difference in longitudinal strength of a coil and reduces a difference in thickness of the cold-rolled steel sheet. When solute C and solute N in steel are fixed by the addition of Ti and/or Nb, B segregates at grain boundaries and increases the strength of the grain boundaries to improve cold shortness, which is remarkable particularly when the content of C is 0.004% or less. In order to achieve this effect, the content of B is preferably 0.0001% or more. On the other hand, when the content of B is more than 0.005%, this effect is saturated and costs are increased; hence, the upper limit of the content of B is preferably 0.005% and more preferably 0.003%.

### (2) Tensile strength and microstructure

The present invention provides a high-strength cold-rolled steel sheet which can be thin-gauged and which has a thickness of 0.4 mm or more and a tensile strength TS of 390 MPa or more.

Unlike container materials, applications to which the present invention is directed and in which rigidity is necessary require component rigidity and therefore the thickness needs to be 0.4 mm or more and more preferably 0.5 mm or more. In applications in which the cold-rolled steel sheet according to the present invention is used, the upper limit of the thickness thereof is about 3.2 mm. In applications in which screw pilot holes are formed, the upper limit of the thickness thereof is about 1.6 mm. For strength, a tensile strength TS of 390 MPa or more is required as described above. In the present invention, high strength is achieved by work hardening during cold rolling. That is, high strength is achieved by cold rolling the hot-rolled steel sheet having the component composition specified in the present invention. The hot-rolled steel sheet, which is a rolling material having the above component composition, has a ferrite microstructure and therefore the cold-rolled steel sheet according to the present invention has a ferrite rolling texture. Since high strength is achieved by work hardening, the ratio of yield strength YS and tensile strength TS, that is, the yield ratio YR (= (YS / TS) × 100%) is greater than that of an SPCC class of steel sheet, which is a recrystallization-annealed conventional material, for general machining and YR is about 80% or more, about 90% or more, or about 95% or more.

### (3) Sheet thickness direction ultimate ductility

Since severe 90-degree bending at a punch tip curvature of 2R or less cannot be evaluated on the basis of ordinary elongation properties because a region deformed thereby is locally limited, the sheet thickness direction ultimate ductility, Ln (the thickness of an untested sheet / the thickness of a fracture surface of the tested sheet), is used in the present invention. When the sheet thickness direction ultimate ductility is 1.3 or more, 90-degree bending at a punch tip curvature of 2R or less can be performed and most severe 90-degree bending at 0R (a punch tip curvature of 0 mm) can be performed. When the sheet thickness direction ultimate ductility is 1.5 or more, contact bending can be performed. Therefore, in the present invention, the sheet thickness direction ultimate ductility is preferably 1.3 or more and more preferably 1.5 or more. In the present invention, the sheet thickness direction ultimate ductility is determined as described below. That is, JIS #5 tensile specimens are taken along a rolling direction and a rolling transverse direction and are subjected to a tensile test specified in JIS Z 2241, fracture surfaces of the fractured specimens are measured for thickness, the sheet thickness direction ultimate ductility in the rolling direction and that in the rolling transverse direction are averaged, and the average is defined as the sheet thickness direction ultimate ductility.

In order to adjust the sheet thickness direction ultimate ductility to 1.3 or more, the number of cementite precipitates in the hot-rolled steel sheet, which is a cold-rolling material, needs to be controlled. Cementite has a significant effect on the bending workability of the cold-rolled steel sheet according to the present invention and therefore the number of the cementite precipitates is preferably small. When the number of the cementite precipitates is less than 5.0 × 10³ per mm², severe 90-degree bending at a punch tip curvature of 2R or less can be performed. In order to enable contact bending, the number thereof is preferably less than 2.3 × 10³ per mm². When the content of C is 0.0040% or less, the number of the cementite precipitates is small and is less than 0.1 × 10³ per mm².

In the case of performing bending as described above, a machined portion is surface-roughened and is disfigured when the crystal grain diameter of the hot-rolled steel sheet, which is a raw material, is large. Therefore, the average ferrite crystal grain diameter of the hot-rolled steel sheet, which is a cold-rolling material, is preferably 25 µm or less.

In applications to which the present invention is directed, punched holes are sometimes burred and are then threaded for the purpose of boring screw pilot holes. In the case of performing burring for screw pilot holes, burring workability is reduced when the average ferrite crystal grain diameter is more than 25 µm. Therefore, the upper limit thereof is preferably 25 µm. In order to achieve sufficient burring height, the average ferrite crystal grain diameter is preferably 15 µm or less. An excessive reduction in grain diameter requires a special manufacturing process such as large strain inducing during hot rolling and therefore causes an increase in cost, which is not preferred. When the average crystal grain diameter of the hot-rolled steel sheet is 8 µm or more, there is no problem with burring workability; hence, the average crystal grain diameter thereof is preferably 8 µm or more. The strength of a screw pilot hole needs to be high such that the screw pilot hole is not broken during threading. Therefore, the cold-rolled steel sheet needs to have a tensile strength TS of 490 MPa or more and a screw-breaking torque of 20 kgf·cm or more. That is, in the present invention, the average ferrite crystal grain diameter of the hot-rolled steel sheet, which is a cold rolling material, is adjusted to 25 µm or less and the tensile strength TS thereof is adjusted to 490 MPa or more, whereby the cold-rolled steel sheet is allowed to have excellent bending workability and excellent screw-breaking torque.

### (4) Manufacturing method

The cold-rolled steel sheet according to the present invention can be manufactured in such a manner that the steel having the above component composition is hot-rolled at a finishing temperature not lower than the Ar₃ transformation point thereof, is coiled at a coiling temperature of 500°C to lower than 650°C, is pickled, and is then cold-rolled at a rolling reduction of 85% or less such that a cold-rolled steel sheet has a tensile strength TS of 390 MPa or more and a thickness of 0.4 mm or more. Reasons for such limitations are described below.

### Finishing temperature during hot rolling: not lower than Ar₃ transformation point

When the finishing temperature is lower than the Ar₃ transformation point, the hot-rolled steel sheet is likely to have a large average crystal grain diameter and a dual-phase microstructure; hence, the finishing temperature is not lower than the Ar₃ transformation point. In order to reduce the crystal grain diameter of the hot-rolled steel sheet using steel which has a C content of 0.025% or less and in which grains are likely to be grown, a strain of 10% to less than 25% is preferably induced therein during final rolling in finish rolling. This is because a strain of less than 10% causes the generation frequency of transformation nuclei to be reduced and causes grains in the hot-rolled steel sheet to be coarse and a strain of 25% or more causes the crown control of the hot-rolled steel sheet to be difficult and is likely to cause a reduction in quality after cold rolling.

The Ar₃ transformation point can be determined from a thermal expansion curve that is obtained in such a manner that an 8-mm ϕ machining Formaster test piece with a height of 12 mm is prepared, is heated to 1200°C, is cooled to 1000°C at a rate of 10 °C/s, is compressed at 1000°C with a strain of 30%, and is then cooled to 200°C at a rate of 5 °C/s.

### Coiling temperature after hot rolling: 500°C to 650°C

When the coiling temperature is higher than 650°C, the crystal grain diameter of the hot-rolled steel sheet is likely to be large. Therefore, the coiling temperature is preferably 650°C or lower and more preferably 600°C or lower. On the other hand, when the coiling temperature is lower than 500°C, the number of the cementite precipitates is increased. Therefore, the coiling temperature is 500°C or higher.

### Pickling: ordinary conditions

In order to remove scales from the hot-rolled steel sheet, the hot-rolled steel sheet is pickled under ordinary conditions.

Cold rolling: a rolling reduction of 85% or less, the tensile strength TS of a cold-rolled steel sheet being 390 MPa or more, the thickness thereof being 0.4 mm or more

When the rolling reduction, which is the reduction achieved by cold rolling, is more than 85%, the bending workability in the rolling transverse direction is significantly reduced and therefore 90-degree bending at a punch tip curvature of 2R or less is difficult. Thus, the rolling reduction is preferably 85% or less and more preferably 75% or less. The rolling reduction may be appropriately determined such that a desired tensile strength TS of 390 MPa or more is achieved. In the present invention, in order to achieve a tensile strength TS of 390 MPa or more, the rolling reduction is preferably 9% or more. In order to achieve a tensile strength TS of 490 MPa or more and good screw-breaking torque, the rolling reduction is preferably 30% or more.

The cold-rolled steel sheet can achieve an object of the present invention as-is and can be improved in bending workability by recovery annealing after cold rolling. The term "recovery annealing" as used herein refers to annealing under conditions capable of maintaining TS ≥ 390 MPa and YR ≥ 80%. A ferrite rolling texture is substantially maintained in the form of a microstructure. That is, in such recovery annealing, the strain energy accumulated in a steel sheet by cold rolling is partly released by the thermal energy applied thereto during annealing, a ferrite rolling texture is mostly maintained in the form of a microstructure, and the area fraction of polygonal ferrite grains that are recrystallized grains is about 10% or less. For recovery annealing, for example, annealing at 500°C for 50 s to 150 s is preferred in the case of the addition of none of Ti and Nb or annealing at 600°C for 50 s to 150 s is preferred in the case of the addition of Ti and/or Nb.

The cold-rolled steel sheet according to the present invention may be plated with zinc, nickel, or the like for automobile or for home appliance use. In this case, when plating is performed by a hot dipping process, immersion in a plating bath or heat treatment subsequent to plating can serve as recovery annealing. Even if the cold-rolled steel sheet is coated with a chemical conversion coating or is processed into a laminated steel sheet, advantageous effects of the present invention are not impaired.

### [EXAMPLE 1]

Steel Nos. 1 to 11 having component compositions shown in Table 1 were hot-rolled under conditions such as a final rolling reduction of 24% and a finishing temperature not lower than the Ar₃ transformation point of each steel sheet, that is, a finishing temperature of 930°C, whereby hot-rolled steel sheets, coiled at a temperature of 590°C, having a thickness of 2.9 mm were obtained. The obtained hot-rolled steel sheets were cold-rolled to a thickness of 0.8 mm at a rolling reduction of 72%, whereby cold-rolled steel sheets were obtained.

For each obtained hot-rolled steel sheet, a widthwise cross-section in the rolling direction thereof was etched with nital, a location corresponding to one-fourth of the thickness thereof was observed at 200-fold magnification and was photographed, and the average crystal grain diameter thereof was calculated by a cutting method specified in JIS G 0552 (1998). The number of cementite precipitates was evaluated on the basis of the number of cementites per unit area in such a manner that after being etched with picral, a 0.21 mm × 0.16 mm field of view was photographed at 400-fold magnification at a location corresponding to one-fourth of the thickness and the number of the cementites in the observed field of view was counted.

From each obtained cold-rolled steel sheet, 25-mm wide specimens for L-bending (bending in which a ridgeline formed by bending extends in the rolling transverse direction) and C-bending (bending in which a ridgeline formed by bending extends in the rolling direction) were taken. The specimens were subjected to a 90-degree bending (90-degree V-bending) test at a punch tip curvature of 0R and the outside of each bent portion was observed and was checked for cracks. Furthermore, a more severe test, that is, a contact bending test was performed and the outside of a bent portion was visually observed and was checked for cracks. The bending workability was evaluated on the basis that a specimen with no cracks caused by the 90-degree V-bending test or the contact bending test was rated as A, one with no cracks caused by the 90-degree V-bending test was rated as B, and one with cracks caused by the 90-degree V-bending test was rated as C. In the observation of the bent portion, the bent portion was checked for surface roughness. Furthermore, 100 mm × 100 mm specimens for a hole expanding test were cut out from the cold-rolled steel sheets. After a 10-mm ϕ hole was punched at the center of each specimen, a 60-degree conical punch was pushed up through the hole in the direction opposite to burrs. The diameter dmm of the hole was measured at the point of time when cracks extended through the specimen in the thickness direction, whereby the hole expansion ratio λ (%) (= (d - 10) / 10 × 100) was determined. Since burring for screw pilot holes is performed at a hole expansion ratio λ of about 50%, the burring workability for screw pilot holes was evaluated on the basis that a specimen with a hole expansion ratio λ of 50% or more was rated as B, one with a hole expansion ratio λ of 60% or more was rated as A, and one with a hole expansion ratio λ of less than 50% was rated as C. Furthermore, JIS #5 tensile specimens were taken along the rolling direction and the rolling transverse direction and were then subjected to a tensile test specified in JIS Z 2241, whereby the average tensile strength TS in the rolling direction and the rolling transverse direction and the ratio of the average yield strength YS and the average tensile strength TS, that is, the yield ratio YR (= YS / TS × 100) (%) were determined. When a yield point was unclear, 0.2% proof stress was regarded as the yield strength (YS). Fracture surfaces of the fractured specimens were measured for thickness, the sheet thickness direction ultimate ductility in the rolling direction and that in the rolling transverse direction were averaged, and the average was defined as the sheet thickness direction ultimate ductility. Furthermore, 1.7-mm ϕ pilot holes were bored only in the steel sheets with a λ of 47% or more and were then burred at a λ of 47%, whereby 2.5-mm screw pilot holes were bored. The torque (screw-breaking torque) breaking each screw pilot hole was measured using an M3 tapping screw.

Results are shown in Table 1. For Steel Nos. 1 to 3 and 5 to 9, which are inventive examples, the number of cementite precipitates in every hot-rolled steel sheet is less than 5.0 × 10³ per mm², the sheet thickness direction ultimate ductility of each cold-rolled steel sheet is 1.3 or more, and no cracks are present in the cold-rolled steel sheet although the cold-rolled steel sheet was worked by most severe 90-degree bending at a punch tip curvature of 0R, which is less than 2R, for both L-bending and C-bending, which shows excellent bending workability. For Steel Nos. 4 and 11, which have a large C content of 0.048% and 0.035%, respectively, and Steel No. 10, which has a large C content and a large Mn content, the number of cementite precipitates in every hot-rolled steel sheet is 5.0 × 10³ per mm² or more and every cold-rolled steel sheet has a sheet thickness direction ultimate ductility of less than 1.3 and is poor in C-bending workability. For Steel Nos. 1 and 2, which are inventive examples and have a large C content and a large S content, every hot-rolled steel sheet has a crystal grain diameter of more than 25 µm, every bent portion has a rough surface, λ is less than 50%, and the burring workability necessary to machine screw pilot holes is poor. For Steel Nos. 3 and 4 to 9, which are inventive examples, every hot-rolled steel sheet has a crystal grain diameter of 25 µm or less, every bent portion has no rough surface, λ is 50% or more, and the burring workability necessary to machine screw pilot holes is excellent. For Steel Nos. 1 and 2, which are inventive examples and have a λ of less than 47%, the screw-breaking torque was incapable of being measured. For Steel Nos. 3 and 4 to 9, the tensile strength TS is 490 MPa or more and the screw-breaking torque is 20 kgf·cm or more, which shows excellent workability for screw pilot holes.

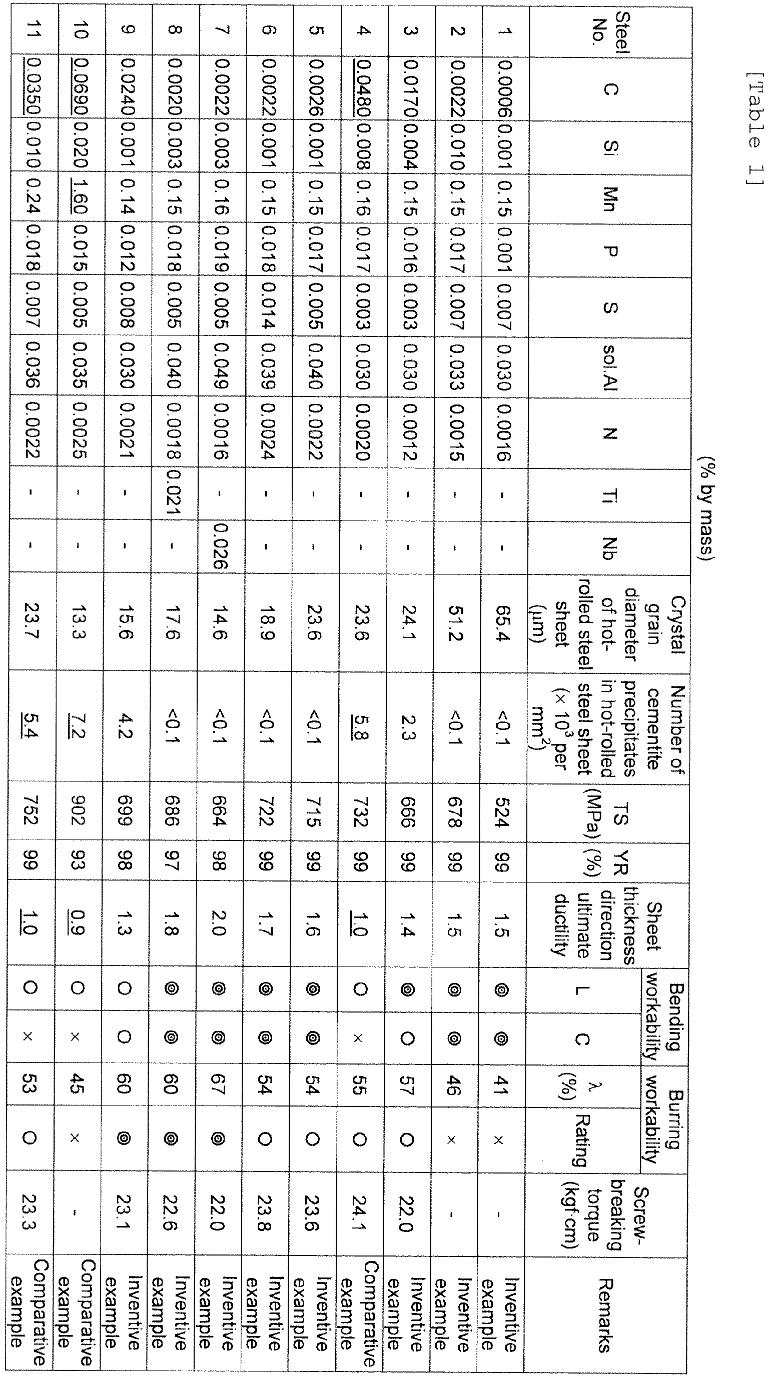

### [EXAMPLE 2]

Hot-rolled steel sheets were manufactured using Steel No. 7 shown in Table 1 under substantially the same conditions as those described in Example 1. After the front and back of each of the hot-rolled steel sheets were ground such that the hot-rolled steel sheets had various thicknesses, the hot-rolled steel sheets were cold-rolled at a rolling reduction ranging from 0% to 72%, whereby cold-rolled steel sheets with a thickness of 0.8 mm were obtained. The hot-rolled steel sheet with a rolling reduction of 0% and the cold-rolled steel sheets were measured for tensile strength TS, yield ratio YR, average sheet thickness direction ultimate ductility, hole expansion ratio λ, and screw-breaking torque and evaluated for bending workability in substantially the same manners as those described in Example 1.

Results are shown in Table 2. A TS of 390 MPa is achieved at a rolling reduction of 9% or more. In this case, the bending workability and the hole expansibility are good regardless of the rolling reduction. When the rolling reduction is 30% or more, the tensile strength TS is as high as 490 MPa or more and a high screw-breaking torque of 20 kgf·cm or more is achieved.

**[Table 2]**

| Rolling reduction (%) | TS (MPa) | YR (%) | Sheet thickness direction ultimate ductility | Bending workability | | Burring workability | | Screw-breaking torque (kgf·cm) | Remarks |
|---|---|---|---|---|---|---|---|---|---|
| | | | | L | C | λ (%) | Rating | | |
| 0 | 311 | 71 | 2.3 | 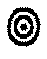 | 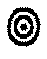 | 124 | 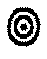 | 15.8 | Comparative example |
| 5 | 347 | 83 | 2.2 | 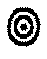 | 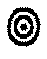 | 102 | 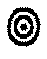 | 16.3 | Comparative example |
| 9 | 392 | 95 | 2.2 | 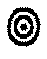 | 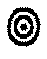 | 84 | 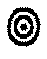 | 17.8 | Inventive example |
| 20 | 413 | 97 | 2.1 | 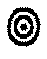 | 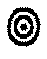 | 72 | 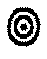 | 18.2 | Inventive example |
| 38 | 535 | 97 | 2.1 | 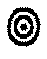 | 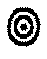 | 68 | 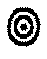 | 20.0 | Inventive example |
| 60 | 626 | 97 | 1.9 | 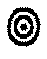 | 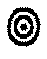 | 67 | 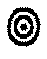 | 21.4 | Inventive example |
| 72 | 664 | 98 | 2.0 | 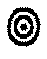 | 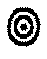 | 67 | 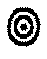 | 22.0 | Inventive example |

### [EXAMPLE 3]

Housings for electronic devices were prepared by a method below using a material (comparative example), prepared in Example 2, having a rolling reduction of 0% (TS = 311 MPa) and a thickness of 0.8 mm and a material (inventive example), prepared in Example 2, having a rolling reduction of 72% (TS = 664 MPa) and a thickness of 0.8 mm.

After the materials were cut into pieces with a size of 150 mm × 150 mm, three screw pilot holes were bored in locations 15 mm apart from end portions of three sides of each piece in substantially the same manner as that described in Example 1, whereby housing bottoms were prepared. The three sides having the screw pilot holes were worked by 90-degree bending (a height of 20 mm) at a punch tip curvature of 0 mm (0R). In order to increase the rigidity of a sheet, the other one was worked by contact bending (C-bending). Next, after the materials were cut into pieces with a size of 152 mm × 152 mm, three sides of each piece were worked by 90-degree bending (a height of 20 mm) at a punch tip curvature of 0 mm, whereby housing lids were prepared. In order to increase the rigidity of a sheet, the other one was worked by contact bending (L-bending). In order to screw the housing lids to the housing bottoms, holes were bored in the housing lids at positions corresponding to the screw pilot holes in the housing bottoms.

The material with a rolling reduction of 0% and the material with a rolling reduction of 72% had no problems with stretchability and screw pilot hole boring, had no cracks or rough surface after 90-degree bending or contact bending, and were machined into the housing bottoms and the housing lids without any problem. The housing bottoms were combined with the housing lids and were then screwed to the housing lids with M3 tapping screws with a torque of 20 kgf·cm, resulting in that the screw pilot holes in the material with a rolling reduction of 0% were broken but those in the material with a rolling reduction of 72% were not broken and the housing bottom was fixed to the housing lid.

These results show that a member can be manufactured by subjecting a cold-rolled steel sheet according to the present invention to severe 90-degree bending at a punch tip curvature of 2R or less even though TS ≥ 390 MPa. Furthermore, in the case of using the cold-rolled steel sheet according to the present invention, a member having no problem with screw pilot hole boring can be manufactured.

### [EXAMPLE 4]

Steel Nos. 12 to 14 containing components shown in Table 3 were hot-rolled under conditions such as a final rolling reduction of 24% and a finishing temperature not lower than the Ar₃ transformation point of each steel sheet, that is, a finishing temperature of 930°C, whereby hot-rolled steel sheets, coiled at a temperature of 590°C, having a thickness of 2.9 mm were obtained. The obtained hot-rolled steel sheets were cold-rolled to a thickness of 0.7 mm at a rolling reduction of 76%, whereby cold-rolled steel sheets were obtained. After being annealed as shown in Table 4, the cold-rolled steel sheets were temper-rolled at an elongation of 0.5%, whereby cold-rolled steel sheets were obtained. The obtained cold-rolled steel sheets were evaluated in substantially the same manners as those described in Example 1. For the evaluation of cold shortness, specimens worked by 90-degree V-bending were cooled in liquid nitrogen and were then tested in such a manner that the specimens were bent and returned to a flat shape at temperatures not higher than -10°C in 20°C intervals. The temperature at which each specimen was broken was determined to be the transition temperature thereof.

For each annealed hot-rolled steel sheet, a widthwise cross-section in the rolling direction thereof was etched with nital, two fields of view located at positions corresponding to one-fourth of the thickness thereof were observed at 200-fold magnification and were photographed. From the two fields of view, the area fraction of polygonal ferrite grains, which were recrystallized grains, in the microstructure was determined. Whether the area fraction of the polygonal ferrite grains was 10% or less was checked, whereby whether recovery annealing was completed was judged.

Results are shown in Table 4.

As is clear from the results of Steel No. 12, the bendability can be improved by performing annealing (recovery annealing) at 450°C for 100 s such that TS ≥ 390 MPa and YR ≥ 80% can be maintained. The screw-breaking torque is significantly reduced by performing annealing at 700°C for 100 s such that TS < 390 MPa and YR < 80% are maintained. It has been confirmed that the area fraction of polygonal ferrite grains in the microstructure of a steel sheet annealed at 450°C for 100 s is 10% or less. The area fraction of polygonal ferrite grains in the microstructure of a steel sheet annealed at 700°C for 100 s is more than 10%.

As is clear from the results of Steel Nos. 13 and 14, the addition of Ti and Nb and the further addition of B cause a reduction in transition temperature, whereby an improvement in cold shortness is achieved. Annealing at 600°C for 100 s is recovery annealing capable of maintaining TS ≥ 390 MPa and YR ≥ 80% and is capable of achieving good properties such as bending properties. The screw-breaking torque is significantly reduced and also the effect of improving cold shortness by the addition of B is not achieved by performing annealing at 800°C for 100 s such that TS < 390 MPa and YR < 80% are maintained. It has been confirmed that the area fraction of polygonal ferrite grains in the microstructure of a steel sheet annealed at 600°C for 100 s is 10% or less. The area fraction of polygonal ferrite grains in the microstructure of a steel sheet annealed at 800°C for 100 s is more than 10%.

**[Table 3]**

| (% by mass) | | | | | | | | | | |
|---|---|---|---|---|---|---|---|---|---|---|
| Steel No. | C | Si | Mn | P | S | sol.Al | N | Ti | Nb | B |
| 12 | 0.0170 | 0.004 | 0.15 | 0.016 | 0.003 | 0.031 | 0.0015 | - | - | - |
| 13 | 0.0020 | 0.008 | 0.16 | 0.015 | 0.005 | 0.036 | 0.0021 | 0.049 | 0.011 | - |
| 14 | 0.0022 | 0.008 | 0.16 | 0.014 | 0.005 | 0.049 | 0.0016 | 0.047 | 0.009 | 0.0009 |

**[Table 4]**

| Steel No. | Crystal grain diameter of hot-rolled steel sheet (µm) | Number of cementite precipitates in hot-rolled steel sheet (× 10³ per mm²) | Annealing conditions | | TS (MPa) | YR (%) | Sheet thickness direction ultimate ductility | Bending workability | | Burring workability | | Screw-breaking torque (kgf·cm) | Transition temperature (°C) | Remarks |
|---|---|---|---|---|---|---|---|---|---|---|---|---|---|---|
| | | | Temperature (°C) | Time (s) | | | | L | C | λ (%) | Rating | | | |
| 12 | 24.2 | 2.3 | - | - | 808 | 99 | 1.3 | ○ | ○ | 53 | ○ | 20.5 | -150 | Inventive example |
| | | | 450 | 100 | 645 | 99 | 1.3 | 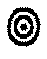 | ○ | 52 | ○ | 21.1 | -130 | Inventive example |
| | | | 700 | 100 | 360 | 77 | 1.4 | 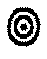 | 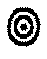 | 106 | 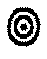 | 16.1 | -150 | Comparative example |
| 13 | 15.9 | <0.1 | - | - | 711 | 99 | 1.9 | 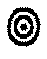 | ○ | 51 | ○ | 21.8 | -90 | Inventive example |
| | | | 600 | 100 | 615 | 91 | 2.0 | 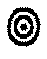 | 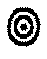 | 53 | ○ | 22.2 | -110 | Inventive example |
| | | | 800 | 100 | 318 | 43 | 2.3 | 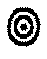 | 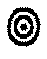 | 125 | 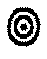 | 16.1 | -170 | Comparative example |
| 14 | 16.1 | <0.1 | - | - | 705 | 99 | 1.9 | 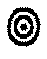 | 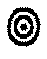 | 52 | ○ | 21.4 | -150 | Inventive example |
| | | | 600 | 100 | 611 | 91 | 1.9 | 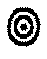 | 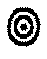 | 52 | ○ | 23.1 | -150 | Inventive example |
| | | | 800 | 100 | 312 | 43 | 2.2 | 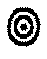 | 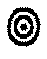 | 131 | 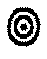 | 15.8 | -170 | Comparative example |

## Claims

1. A cold-rolled steel sheet with excellent bending workability, having a component composition of 0.025% or less C, 0.1% or less Si, 0.05% to 0.5% Mn, 0.03% or less P, 0.02% or less S, and 0.01% to 0.1% sol. Al on a mass basis, optionally one or more of 0.002% to 0.05% Ti, 0.002% to 0.05% Nb and 0.0001% to 0.005% B, the remainder being Fe and unavoidable impurities; a microstructure that is a ferrite rolling texture; a tensile strength TS of 390 MPa or more; a thickness of 0.4 mm or more; and a sheet thickness direction ultimate ductility of 1.3 or more, wherein the sheet thickness direction ultimate ductility is the natural logarithm Ln (t₀/t₁) of the ratio of the thickness t₀ of an untested steel sheet to the thickness t₁ of the fracture surface of the tested steel sheet as determined by a tensile test.

2. The cold-rolled steel sheet with excellent bending workability according to claim 1, having a yield ratio of 80% or more.

3. The cold-rolled steel sheet with excellent bending workability according to claim 1, wherein the number of cementite precipitates in a hot-rolled steel sheet is less than 5.0 × 10³ per mm².

4. The cold-rolled steel sheet with excellent bending workability according to Claim 3, wherein the hot-rolled steel sheet has an average crystal grain diameter of 25 µm or less.

5. The cold-rolled steel sheet with excellent bending workability according to any one of Claims 1 to 4, wherein in the component composition, the content of C is 0.0040% or less on a mass basis.

6. The cold-rolled steel sheet with excellent bending workability according to any one of Claims 1 to 5, wherein the tensile strength TS is 490 MPa or more.

7. A method for manufacturing a cold-rolled steel sheet with excellent bending workability, comprising hot-rolling a steel having a component composition of 0.025% or less C, 0.1% or less Si, 0.05% to 0.5% Mn, 0.03% or less P, 0.02% or less S, and 0.01% to 0.1% sol. Al on a mass basis, optionally one or more of 0.002% to 0.05% Ti, 0.002% to 0.05% Nb and 0.0001% to 0.005% B, the remainder being Fe and unavoidable impurities, at a finishing temperature not lower than the Ar₃ transformation point thereof; coiling the hot-rolled steel sheet at a coiling temperature of 500°C to 600°C; pickling the hot-rolled steel sheet; and cold-rolling the hot-rolled steel sheet at a rolling reduction of 75% or less such that the cold-rolled steel sheet has a tensile strength TS of 390 MPa or more and a thickness of 0.4 mm or more.

8. The method for manufacturing the cold-rolled steel sheet with excellent bending workability according to Claim7, wherein in the component composition, the content of C is 0.0040% or less on a mass basis.

9. The method for manufacturing the cold-rolled steel sheet with excellent bending workability according to Claim 7 or 8, further comprising recovery annealing after cold rolling.

## Patentansprüche

1. Kaltgewalztes Stahlblech mit ausgezeichneter Biegeverarbeitbarkeit, das aufweist: eine Bestandteilzusammensetzung von 0,025% oder weniger C, 0,1% oder weniger Si, 0,05% bis 0,5% Mn, 0,03% oder weniger P, 0,02% oder weniger S und 0,01% bis 0,1% sol. Al auf einer Massenbasis, wahlweise eines oder mehrere von 0,002% bis 0,05% Ti, 0,002% bis 0,05% Nb und 0,0001% bis 0,005% B, wobei der Rest Fe und unvermeidbare Verunreinigungen sind; ein Mikrogefüge, das eine Ferrit-Walztextur ist; eine Zugfestigkeit TS von 390 MPa oder mehr; eine Dicke von 0,4 mm oder mehr; und eine Endduktilität in Blechdickenrichtung von 1,3 oder mehr, wobei die Endduktilität in Blechdickenrichtung der natürliche Logarithmus Ln (t₀/t₁) des Verhältnisses der Dicke to eines ungeprüften Stahlblechs zu der Dicke t₁ der Bruchfläche des geprüften Stahlblechs ist, wie es durch einen Zugversuch bestimmt wurde.

2. Kaltgewalztes Stahlblech mit ausgezeichneter Biegeverarbeitbarkeit nach Anspruch 1, mit einem Streckgrenzenverhältnis von 80% oder mehr.

3. Kaltgewalztes Stahlblech mit ausgezeichneter Biegeverarbeitbarkeit nach Anspruch 1, wobei die Anzahl der Zementitausfällungen in einem warmgewalzten Stahlblech weniger als 5,0 × 10³ pro mm² beträgt.

4. Kaltgewalztes Stahlblech mit ausgezeichneter Biegeverarbeitbarkeit nach Anspruch 3, wobei das warmgewalzte Stahlblech einen durchschnittlichen Kristallkorndurchmesser von 25 µm oder weniger aufweist.

5. Kaltgewalztes Stahlblech mit ausgezeichneter Biegeverarbeitbarkeit nach einem der Ansprüche 1 bis 4, wobei bei der Bestandteilzusammensetzung der Gehalt an C 0,0040% oder weniger auf einer Massenbasis beträgt.

6. Kaltgewalztes Stahlblech mit ausgezeichneter Biegeverarbeitbarkeit nach einem der Ansprüche 1 bis 5, bei dem die Zugfestigkeit TS 490 MPa oder mehr beträgt.

7. Verfahren zur Herstellung eines kaltgewalzten Stahlblechs mit ausgezeichneter Biegeverarbeitbarkeit, umfassend das Warmwalzen eines Stahls mit einer Bestandteilzusammensetzung von 0,025% oder weniger C, 0,1% oder weniger Si, 0,05% bis 0,5% Mn, 0,03 % oder weniger P, 0,02% oder weniger S und 0,01% bis 0,1% sol. Al auf einer Massenbasis, gegebenenfalls einen oder mehr von 0,002% bis 0,05% Ti, 0,002% bis 0,05% Nb und 0,0001% bis 0,005% B, wobei der Rest Fe und unvermeidbare Verunreinigungen sind, bei einer Fertigtemperatur von nicht weniger als dem Ar₃-Transformationspunkt davon; Wickeln des warmgewalzten Stahlblechs bei einer Wickeltemperatur von 500°C bis 600°C; Beizen des warmgewalzten Stahlblechs; und Kaltwalzen des warmgewalzten Stahlblechs mit einer Walzreduktion von 75% oder weniger, so dass das kaltgewalzte Stahlblech eine Zugfestigkeit TS von 390 MPa oder mehr und eine Dicke von 0,4 mm oder mehr aufweist.

8. Verfahren zur Herstellung des kaltgewalzten Stahlblechs mit ausgezeichneter Biegeverarbeitbarkeit nach Anspruch 7, wobei bei der Komponentenzusammensetzung der Anteil von C 0,0040% oder weniger auf einer Massenbasis ist.

9. Verfahren zur Herstellung des kaltgewalzten Stahlblechs mit ausgezeichneter Biegeverarbeitbarkeit nach Anspruch 7 oder 8, weiterhin umfassend ein Widerherstellungsanlassen nach dem Kaltwalzen.

## Revendications

1. Tôle d'acier laminée à froid dotée d'une excellente aptitude au façonnage par pliage, ayant une composition en constituants de 0,025 % ou moins de C, 0,1 % ou moins de Si, 0,05 % à 0,5 % de Mn, 0,03 % ou moins de P, 0,02 % ou moins de S et 0,01 % à 0,1 % d'Al sol. sur une base massique, éventuellement l'un ou plusieurs de 0,002 % à 0,05 % de Ti, 0,002 % à 0,05 % de Nb et 0,0001 % à 0,005 % de B, le reste étant du Fe et des impuretés inévitables ; une microstructure qui est une texture de laminage de ferrite ; une résistance à la traction TS de 390 MPa ou plus ; une épaisseur de 0,4 mm ou plus ; et une ductilité ultime dans le sens d'épaisseur de la tôle de 1,3 ou plus, la ductilité ultime dans le sens d'épaisseur de la tôle étant le logarithme naturel Ln (t₀/t₁) du rapport de l'épaisseur to d'une tôle d'acier non soumise à essai à l'épaisseur t₁ de la surface de rupture de la tôle d'acier soumise à essai ainsi que déterminée par un essai de traction.

2. Tôle d'acier laminée à froid dotée d'une excellente aptitude au façonnage par pliage selon la revendication 1, ayant un rapport limite d'élasticité/tension de rupture de 80 % ou plus.

3. Tôle d'acier laminée à froid dotée d'une excellente aptitude au façonnage par pliage selon la revendication 1, dans laquelle le nombre de précipités de cémentite dans une tôle d'acier laminée à chaud est inférieur à 5,0 × 10³ par mm².

4. Tôle d'acier laminée à froid dotée d'une excellente aptitude au façonnage par pliage selon la revendication 3, la tôle d'acier laminée à chaud ayant un diamètre moyen de grain cristallin de 25 µm ou moins.

5. Tôle d'acier laminée à froid dotée d'une excellente aptitude au façonnage par pliage selon l'une quelconque des revendications 1 à 4, où dans la composition en constituants, la teneur en C est de 0,0040 % ou moins sur une base massique.

6. Tôle d'acier laminée à froid dotée d'une excellente aptitude au façonnage par pliage selon l'une quelconque des revendications 1 à 5, où la résistance à la traction TS est de 490 MPa ou plus.

7. Procédé de fabrication d'une tôle d'acier laminée à froid dotée d'une excellente aptitude au façonnage par pliage, comprenant le laminage à chaud d'un acier ayant une composition en constituants de 0,025 % ou moins de C, 0,1 % ou moins de Si, 0,05 % à 0,5 % de Mn, 0,03 % ou moins de P, 0,02 % ou moins de S et 0,01 % à 0,1 % d'Al sol. sur une base massique, éventuellement l'un ou plusieurs de 0,002 % à 0,05 % de Ti, 0,002 % à 0,05 % de Nb et 0,0001 % à 0,005 % de B, le reste étant du Fe et des impuretés inévitables, à une température de finissage non inférieure au point de transformation Ar₃ de celui-ci ; l'enroulement de la tôle d'acier laminée à chaud à une température d'enroulement de 500 °C à 600 °C ; le décapage de la tôle d'acier laminée à chaud ; et le laminage à froid de la tôle d'acier laminée à chaud à un taux de réduction par laminage de 75 % ou moins de telle sorte que la tôle d'acier laminée à froid présente une résistance à la traction TS de 390 MPa ou plus et une épaisseur de 0,4 mm ou plus.

8. Procédé de fabrication de la tôle d'acier laminée à froid dotée d'une excellente aptitude au façonnage par pliage selon la revendication 7, où dans la composition en constituants, la teneur en C est de 0,0040 % ou moins sur une base massique.

9. Procédé de fabrication de la tôle d'acier laminée à froid dotée d'une excellente aptitude au façonnage par pliage selon la revendication 7 ou 8, comprenant en outre un recuit de relaxation après le laminage à froid.
